(19) Europäisches Patentamt / European Patent Office / Office européen des brevets

(11) **EP 4 524 181 A1**

(12) **EUROPEAN PATENT APPLICATION**
published in accordance with Art. 153(4) EPC

(43) Date of publication:
**19.03.2025 Bulletin 2025/12**

(21) Application number: 23830703.7

(22) Date of filing: **02.02.2023**

(51) International Patent Classification (IPC):
**C08G 77/60** (2006.01)   **C01B 32/977** (2017.01)
**D01F 9/10** (2006.01)

(52) Cooperative Patent Classification (CPC):
**C01B 32/977; C08G 77/60; D01F 9/10**

(86) International application number:
**PCT/JP2023/003367**

(87) International publication number:
**WO 2024/004247 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   01.07.2022   JP 2022107344
           14.10.2022   JP 2022165844

(71) Applicant: **Kureha Corporation**
Chuo-ku
**Tokyo 103-8552 (JP)**

(72) Inventors:
• **NAITO, Ryota**
  **Tokyo 103-8552 (JP)**
• **SAITO, Junki**
  **Tokyo 103-8552 (JP)**
• **IUCHI, Ryo**
  **Tokyo 103-8552 (JP)**
• **YAMAKAWA, Koji**
  **Tokyo 103-8552 (JP)**
• **GOTO, Tatsuru**
  **Tokyo 103-8552 (JP)**

(74) Representative: **Zimmermann & Partner Patentanwälte mbB**
**Postfach 330 920**
**80069 München (DE)**

(54) **POLYCARBOSILANE, METHOD FOR PRODUCING POLYCARBOSILANE, AND METHOD FOR PRODUCING SILICON CARBIDE FIBERS**

(57)   Polycarbosilane according to the embodiments has a bonding index, which is an indicator of a degree of branching, represented by the following Formula (1) of 2.63 or more and an oxygen content of 1.15 wt.% or less.

$$\text{Bonding index} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

EP 4 524 181 A1

[FIG. 2]

## Description

### TECHNICAL FIELD

The present invention relates to polycarbosilane, a method for producing the same, and a method for producing silicon carbide fibers.

### BACKGROUND ART

Silicon carbide fibers have excellent heat resistance and oxidation resistance even in a high-temperature atmosphere such as one thousand and several hundred degrees. With these characteristics, silicon carbide fibers are expected to be applied in the nuclear field and the aerospace field.

It is known that silicon carbide fibers can be obtained by subjecting an organosilicon polymer compound such as polycarbosilane, which is a precursor, to molecular weight adjustment, spinning, and pyrolyzing.

For example, Patent Document 1 discloses a method in which polycarbosilane is synthesized from a polysilane by a liquid phase-gas phase thermolysis condensation method, and silicon carbide fibers are produced from the synthesized polycarbosilane.

Patent Document 2 discloses a method for producing an organosilicon polymer compound having silicon and carbon as main skeleton components and describes an example in which a cyclic silane compound is used as a raw material.

### CITATION LIST

### PATENT DOCUMENT

    Patent Document 1: JP 2019-137935 A
    Patent Document 2: JP S51-126300 A

### SUMMARY OF INVENTION

### TECHNICAL PROBLEM

Silicon carbide fibers are expected to be applied in the nuclear field and the aerospace field, and thus silicon carbide fibers having a higher strength than known silicon carbide fibers are in demand.

The present invention has been made in light of the issues described above and is directed to providing polycarbosilane from which silicon carbide fibers having a high strength can be produced.

### SOLUTION TO PROBLEM

As a result of intensive studies, the present inventors have found that, through production by a predetermined method using a cyclic silane compound as a raw material, a highly branched polycarbosilane can be obtained, from which silicon carbide fibers having a high strength can be produced and have completed the present invention.

Polycarbosilane according to one aspect of the present invention has a bonding index, which is an indicator of a degree of branching, represented by the following Formula (1) of 2.63 or more, and an oxygen content of 1.15 wt.% or less:
[Math. 1]

$$\text{Bonding index} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \quad \cdots (1)$$

where in Formula (1),

    $X_{CH3}$, $X_{CH2}$, $X_{CH}$, and $X_C$ are values obtained by dividing weight percentages of primary, secondary, tertiary, and quaternary carbon atoms, respectively, by 12, and

$Y_{SiH3}$, $Y_{SiH2}$, $Y_{SiH}$, and $Y_{Si}$ are values obtained by dividing weight percentages of primary, secondary, tertiary, and quaternary silicon atoms, respectively, by 28.086.

A method for producing polycarbosilane according to one aspect of the present invention is a method for producing the polycarbosilane according to the one aspect of the present invention, the method including a polycarbosilane synthesis step, which includes performing repeatedly: a process of heating a raw material containing a cyclic silane compound at a first temperature to generate a gas phase, a process of heating the gas phase at a second temperature higher than the first temperature to generate polycarbosilane, and a process of cooling and returning the polycarbosilane to the raw material and heating the returned polycarbosilane at the first temperature to increase a molecular weight of the polycarbosilane.

A method for producing silicon carbide fibers according to one aspect of the present invention includes a spinning step of spinning the polycarbosilane according to the one aspect of the present invention into a fibrous shape, and a pyrolyzing step of pyrolyzing the polycarbosilane fibers generated in the spinning step.

## ADVANTAGEOUS EFFECTS OF INVENTION

According to one aspect of the present invention, it is possible to provide highly branched polycarbosilane.

## BRIEF DESCRIPTION OF THE DRAWINGS

FIG. 1 is a view illustrating a liquid phase-gas phase thermolysis apparatus 10 that can be used for polycarbosilane synthesis.
FIG. 2 is a graph indicating a relationship between a bonding index of polycarbosilane and a tensile strength of silicon carbide fibers.

## DESCRIPTION OF EMBODIMENTS

1. Polycarbosilane

Polycarbosilane according to one aspect of the present invention has a bonding index, which is an indicator of a degree of branching, represented by the following Formula (1) of 2.58 or more, and an oxygen content of 1.15 wt.% or less. According to such a configuration, a highly branched polycarbosilane can be obtained.

[Math. 2]

$$\text{Bonding index} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

In Formula (1),

$X_{CH3}$, $X_{CH2}$, $X_{CH}$, and $X_C$ are values obtained by dividing weight percentages of primary, secondary, tertiary, and quaternary carbon atoms, respectively, by 12, and
$Y_{SiH3}$, $Y_{SiH2}$, $Y_{SiH}$, and $Y_{Si}$ are values obtained by dividing weight percentages of primary, secondary, tertiary, and quaternary silicon atoms, respectively, by 28.086.

Bonding index

The term "bonding index" as used herein is an indicator of the degree of branching of polycarbosilane and is a value determined by Formula (1) described above. As used herein, the term "branching" refers to a moiety in which a carbon atom or silicon atom is bonded to an atom other than a hydrogen atom. For example, branching of $CH_3$-$CH_3$ refers to a moiety in which the carbon atom described on the left is bonded to an atom other than a hydrogen atom and a moiety in which the carbon atom described on the right is bonded to an atom other than a hydrogen atom. Similarly, branching of silicon atoms refers to a moiety in which all silicon atoms are bonded to an atom other than a hydrogen atom. Thus, the higher the bonding index leads to the more highly branched polycarbosilane.

In Formula (1), $X_{CH3}$, $X_{CH2}$, $X_{CH}$, and $X_c$ are values obtained by dividing weight percentages of primary, secondary, tertiary, and quaternary carbon atoms, respectively, by 12. As used herein, the term "primary carbon" refers to a carbon to which three hydrogens are bonded. The term "secondary carbon" refers to a carbon to which two hydrogens are bonded. The term "tertiary carbon" refers to a carbon to which one hydrogen is bonded. The term "quaternary carbon" refers to a carbon to which no hydrogen is bonded. In Formula (1), 12 is the atomic weight of carbon. Thus, $X_{CH3}$, $X_{CH2}$, $X_{CH}$, and $X_c$ are specifically as represented by Formulas (2) to (5) described below:

[Math. 3]

$$X_{CH3} = \frac{\text{wt.\% of Primary carbon atoms}}{12} \quad \cdots (2)$$

[Math. 4]

$$X_{CH2} = \frac{\text{wt.\% of Secondary carbon atoms}}{12} \quad \cdots (3)$$

[Math. 5]

$$X_{CH} = \frac{\text{wt.\% of Tertiary carbon atoms}}{12} \quad \cdots (4)$$

[Math. 6]

$$X_c = \frac{\text{wt.\% of Quaternary carbon atoms}}{12} \quad \cdots (5)$$

Here, the weight percentages of primary, secondary, and tertiary carbon atoms are values obtained by dividing the weight percentage of hydrogen atoms of each carbon by a product of the number of hydrogen atoms bonded to each carbon and the atomic weight of hydrogen, and multiplying the result by the atomic weight of carbon. Note that as used herein, 1 is assumed to be the atomic weight of hydrogen and used for calculation. The weight percentage of the quaternary carbon atom is a value obtained by subtracting the weight percentages of the primary, secondary, and tertiary carbon atoms from the elemental analysis value of carbon atoms. Thus, the weight percentages of primary, secondary, tertiary, and quaternary carbon atoms are specifically as represented by Formulas (6) to (9) described below: The elemental analysis value of carbon atoms can be determined by a known method.

[Math. 7]

$$\text{wt.\% of Primary carbon atoms} = \frac{\text{wt.\% of Hydrogen atoms of primary carbon}}{3} \times 12 \quad \cdots (6)$$

[Math. 8]

$$\text{wt.\% of Secondary carbon atoms} = \frac{\text{wt.\% of Hydrogen atoms of secondary carbon}}{2} \times 12 \quad \cdots (7)$$

[Math. 9]

$$\text{wt.\% of Tertiary carbon atoms} = \frac{\text{wt.\% of Hydrogen atoms of tertiary carbon}}{1} \times 12 \quad \cdots (8)$$

[Math. 10]

wt.% of Quaternary carbon atoms
= Elemental analysis value of carbon atoms (wt.%) - (wt.% of Primary carbon atoms
+ wt.% of Secondary carbon atoms + wt.% of Tertiary carbon atoms)

$$\cdots (9)$$

Here, the weight percentages of hydrogen atoms of primary, secondary, and tertiary carbons are values obtained by multiplying area ratios of $^1$H-NMR of primary, secondary, and tertiary carbons by the elemental analysis value of hydrogen atoms, respectively. The area ratios of $^1$H-NMR of primary, secondary, and tertiary carbons are ratios of respective area ratios of hydrogen atoms of primary, secondary, and tertiary carbons to Si-H measured by $^1$H-NMR and a total value of area ratios obtained by normalizing area values of hydrogen atoms of primary, secondary, and tertiary carbons with Si-H. Thus, the weight percentages of the hydrogen atoms of the primary, secondary, and tertiary carbons are specifically as represented by Formulas (10) to (12) described below: [Math. 11]

wt.% of Hydrogen atoms of primary carbon = Area ratio of $^1$H-NMR of
primary carbon × Elemental analysis value of hydrogen atoms (wt.%) $\cdots (10)$

[Math. 12]

wt.% of Hydrogen atoms of secondary carbon = Area ratio of $^1$H-NMR of
secondary carbon × Elemental analysis value of hydrogen atoms (wt.%) $\cdots (11)$

[Math. 13]

wt.% of Hydrogen atoms of tertiary carbon = Area ratio of $^1$H-NMR of
tertiary carbon × Elementary analysis value of hydrogen atoms (wt.%) $\cdots (12)$

The area values of the hydrogen atoms of the primary, secondary, and tertiary carbons in the polycarbosilane in $^1$H-NMR can be determined by calculating integration values using a signal of 5.5 to 3.5 ppm as a signal derived from hydrogen on tertiary silicon (-SiH<), a signal of 1.0 to 0 ppm as a signal derived from hydrogen on primary carbon (CH$_3$-), a signal of 0 to -0.4 ppm as a signal derived from hydrogen on secondary carbon (-CH$_2$-), and a signal of -0.4 to -1.0 ppm as a signal derived from hydrogen on tertiary carbon (-CH<). The elemental analysis value of hydrogen atoms can be determined by a known method.

In Formula (1), $Y_{SiH3}$, $Y_{SiH2}$, $Y_{SiH}$, and $Y_{Si}$ are values obtained by dividing the weight percentages of primary, secondary, tertiary, and quaternary silicon atoms, respectively, by 28.086. As used herein, the term "primary silicon" refers to silicon to which three hydrogens are bonded. The term "secondary silicon" refers to silicon to which two hydrogens are bonded. The term "tertiary silicon" refers to silicon to which one hydrogen is bonded. The term "quaternary silicon" refers to silicon to which no hydrogen is bonded. In Formula (1), 28.086 is the atomic weight of silicon. Thus, $Y_{SiH3}$, $Y_{SiH2}$, $Y_{SiH}$, and $Y_{Si}$ are specifically as represented by Formulas (13) to (16) described below: [Math. 14]

$$Y_{SiH3} = \frac{\text{wt.\% of Primary silicon atoms}}{28.086} \quad \cdots (13)$$

[Math. 15]

$$Y_{SiH2} = \frac{\text{wt.\% of Secondary silicon atoms}}{28.086} \quad \cdots (14)$$

[Math. 16]

$$Y_{SiH} = \frac{\text{wt.\% of Tertiary silicon atoms}}{28.086} \quad \cdots (15)$$

[Math. 17]

$$Y_{Si} = \frac{\text{wt.\% of Quaternary silicon atoms}}{28.086} \quad \cdots (16)$$

Here, the weight percentages of primary, secondary, tertiary, and quaternary silicon atoms are values obtained by multiplying area ratios of $^{29}$Si-NMR of primary, secondary, tertiary, and quaternary silicon atoms by the elemental analysis value of silicon atoms. The area ratios of $^{29}$Si-NMR of primary, secondary, tertiary, and quaternary silicon atoms are ratios of respective area ratios of primary, secondary, tertiary, and quaternary silicon atoms to a total value of area ratios of primary, secondary, tertiary, and quaternary silicon atoms normalized by quaternary silicon atoms. The weight percentages of primary, secondary, tertiary, and quaternary silicon atoms are thus specifically as represented by Formulas (17) to (20) described below: [Math. 18]

$$\text{wt.\% of Primary silicon atoms} = \text{Area ratio of }[29]\text{Si-NMR of primary silicon atoms} \times \text{Elemental analysis value of silicon atoms (wt.\%)} \quad \cdots (17)$$

[Math. 19]

$$\text{wt.\% of Secondary silicon atoms} = \text{Area ratio of }[29]\text{Si-NMR of secondary silicon atoms} \times \text{Elemental analysis value of silicon atoms (wt.\%)} \quad \cdots (18)$$

[Math. 20]

$$\text{wt.\% of Tertiary silicon atoms} = \text{Area ratio of }[29]\text{Si-NMR of tertiary silicon atoms} \times \text{Elemental analysis value of silicon atoms (wt.\%)} \quad \cdots (19)$$

[Math. 21]

$$\text{wt.\% of Quaternary silicon atoms} = \text{Area ratio of }[29]\text{Si-NMR of quaternary silicon atoms} \times \text{Elemental analysis value of silicon atoms (wt.\%)} \quad \cdots (20)$$

The area ratios of primary, secondary, tertiary, and quaternary silicon atoms in the polycarbosilane in $^{29}$Si-NMR can be determined by calculating integration values using a signal of 10 to -8 ppm as a signal derived from quaternary silicon ($>Si<$), a signal of -8 to -24 ppm as a signal derived from tertiary silicon ($-SiH<$), a signal of -30 to -50 ppm as a signal derived from secondary silicon ($-SiH_2-$), and a signal of -40 to -70 ppm as primary silicon ($-SiH_3$). The elemental analysis value of silicon atoms can be determined by a known method.

The bonding index can be calculated by the calculation method described above.

The polycarbosilane according to the present embodiment has a bonding index of 2.58 or more, preferably 2.61 or more, and more preferably 2.63 or more. A bonding index in such a range results in a highly branched polycarbosilane. In a case where silicon carbide fibers (hereinafter, also referred to as "SiC fibers") are produced from polycarbosilane having such a bonding index, SiC fibers having a high tensile strength can be obtained. The tensile strength will be described below.

Oxygen content

The polycarbosilane has an oxygen content of 1.15 wt.% or less, preferably 1.0 wt.% or less, more preferably 0.9 wt.% or less, and even more preferably 0.8 wt.% or less. In a case where SiC fibers are produced from the polycarbosilane having the oxygen content in such a range, SiC fibers having high heat resistance can be obtained.

The oxygen content can be measured by a known method for measuring an oxygen content of polycarbosilane.

For example, it can be calculated by elemental analysis.

Number average molecular weight

The polycarbosilane in the present embodiment may have a number average molecular weight of less than 6000, preferably less than 5500, and more preferably less than 5000. Even the number average molecular weight of less than 6000 is acceptable, and thus the polycarbosilane having a low molecular weight, which is to be removed by molecular weight adjustment, can be reduced, resulting in an increase in yield of polycarbosilane. In a case where a green fiber is produced from polycarbosilane, the polycarbosilane having a number average molecular weight of less than 6000 can be suitably used for dry spinning. Specifically, the polycarbosilane having a number average molecular weight of less than 6000 can increase the concentration of a spinning solution, and thus an amount of solvent to evaporate can be suppressed, which makes it easy to perform spinning. In addition, the polycarbosilane having a number average molecular weight of less than 6000 contains a large amount of the polycarbosilane having a low molecular weight, and becomes thus hardly in a gel state, which makes it easy to adjust the spinning solution.

A softening point, which indicates a temperature at which the polycarbosilane begins to melt, is proportional to both a molecular weight and branching. The polycarbosilane in the present embodiment has a bonding index, which is an indicator of the degree of branching, of 2.58 or more, and thus the softening point does not become too low even for the polycarbosilane having a number average molecular weight of less than 6000. Accordingly, when fibers prepared from the polycarbosilane are pyrolyzed, the fibers are less likely to fuse. The number average molecular weight is preferably 1500 or more, more preferably 2500 or more, and even more preferably 4000 or more, from the viewpoint of setting the softening point to such an extent that the fibers do not fuse at the time of pyrolyzing.

The number average molecular weight can be determined by a known method for measuring a number average molecular weight. For example, it can be measured by gel permeation chromatography (GPC) measurement.

2. Method for Producing Polycarbosilane

A method for producing polycarbosilane according to one aspect of the present invention is a method for producing the polycarbosilane according to the one aspect of the present invention, the method including a polycarbosilane synthesis step, which includes performing: a process of heating a raw material containing a cyclic silane compound at a first temperature to generate a gas phase (hereinafter, referred to as "first heating process"); a process of heating the gas phase at a second temperature higher than the first temperature to generate polycarbosilane (hereinafter, referred to as "second heating process"); and a process of cooling and returning the polycarbosilane to the raw material and heating the returned polycarbosilane at the first temperature to increase a molecular weight of the polycarbosilane (hereinafter, referred to as "molecular weight increasing process"). According to such a configuration, a highly branched polycarbosilane can be produced.

Polycarbosilane synthesis step

The polycarbosilane synthesis step is a step that includes a first heating process, a second heating process, and a molecular weight increasing process and repeatedly performs a series of reactions of the processes to synthesize the polycarbosilane from a cyclic silane compound.

The first heating process is a process of generating a gas phase by heating a raw material containing a cyclic silane compound at a first temperature. The raw material containing the cyclic silane compound may be a solid, a liquid, or a mixture of a liquid and a solid. As used herein, the first temperature indicates the measurement result of an internal temperature of a reaction vessel in which the raw material is placed. That is, the first temperature is the temperature of a content itself of the reaction vessel. The first temperature is not particularly limited as long as it is a temperature at which at least a part of the cyclic silane compound can be vaporized to generate a gas phase. Typically, it may be in a range of from 100°C to 500°C, and may be in a range of from 400°C to 500°C. When heating is performed at the temperature, the cyclic silane compound is thermally decomposed to generate a gas phase, and the gas phase is also generated by sublimation or vaporization after liquefaction of the cyclic silane compound.

In the method for producing polycarbosilane according to the one aspect of the present invention, the cyclic silane compound is a compound having a skeleton composed only of a Si-Si bond as a main chain, and the main chain forms a ring. The number of members of the cyclic silane compound used in the method for producing polycarbosilane is preferably 15 or less, more preferably 10 or less, and even more preferably 7 or less. The cyclic silane compound may have a single ring or a plurality of rings. In addition, the side chain of the cyclic silane compound may have any structure. Examples of the cyclic silane compound include octamethylcyclotetrasilane, decamethylcyclopentasilane, dodecamethylcyclohexasilane, and tetradecamethylcycloheptasilane. From the viewpoint of raw material supply, the cyclic silane compound is preferably dodecamethylcyclohexasilane.

An amount of the cyclic silane compound used in the polycarbosilane synthesis step can be appropriately adjusted depending on an apparatus for synthesizing the polycarbosilane and a desired amount of the polycarbosilane synthesized.

The second heating process is a process of heating the gas phase generated in the first heating process at a second temperature higher than the first temperature to generate polycarbosilane. By the second heating process, the Si-Si bond of the cyclic silane compound can be radically cleaved and rearranged to produce polycarbosilane. As used herein, the second temperature indicates the measurement result of an internal temperature of a reaction tube which contains the gas phase, when the gas phase generated from the raw material containing the cyclic silane compound is heated. That is, the second temperature is the temperature of the gas phase itself heated in the second heating process. The generated polycarbosilane is cooled and returned to the raw material undergoing the first heat process.

From the viewpoint of the oxygen content of the synthesized polycarbosilane, the oxygen content of the polycarbosilane is unlikely to increase, and thus the second temperature is preferably lower than 660°C, more preferably 650°C or lower, and even more preferably 600°C or lower. As a result of the study, in the method of the present embodiment using the cyclic silane compound as the raw material, it is confirmed that the viscosity of the generated polycarbosilane is significantly increased when the second temperature is raised, and clogging of the pipe is caused depending on the apparatus. Accordingly, from the viewpoint of operability of the apparatus for synthesizing the polycarbosilane, the second temperature is preferably 650°C or lower to prevent the pipe of the apparatus from being clogged with the synthesized polycarbosilane. In addition, the second temperature is preferably 500°C or higher from the viewpoint of rearranging the cyclic silane compound, and is preferably 600°C or higher from the viewpoint of increasing branching of the polycarbosilane.

The molecular weight increasing process is a process in which the polycarbosilane generated in the second heating process is cooled, returned to the raw material, and heated at the first temperature to increase the molecular weight of the polycarbosilane. By the molecular weight increasing process, the polycarbosilane generated by the second heating process can be polycondensed to increase the molecular weight. The cooling temperature is not particularly limited as long as the polycarbosilane in a gaseous state can be cooled to such an extent that it is liquefied. The first temperature is the same as the description of the first temperature in the first heating process.

When a series of these reactions is repeatedly performed, the molecular weight of the polycarbosilane is gradually increased and polycarbosilane having a higher molecular weight can be obtained.

The synthesis time in the polycarbosilane synthesis step can be appropriately adjusted in accordance with a desired molecular weight and branching of the polycarbosilane. For example, the synthesis time can be set to 4 hours or longer and 10 hours or shorter, preferably 4 hours or longer and 8 hours or shorter, and more preferably 6 hours or longer and 7 hours or shorter.

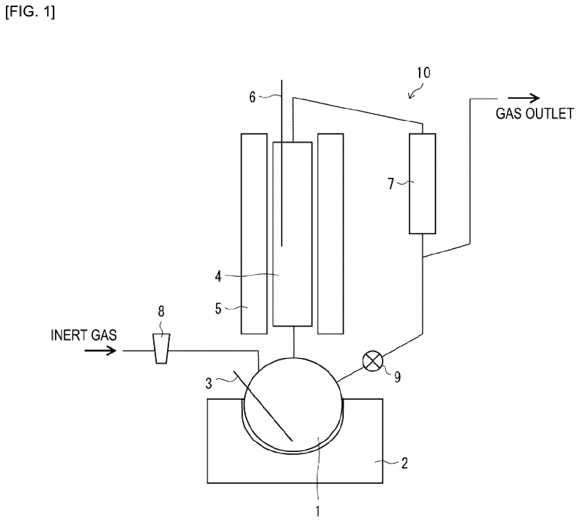

With reference to FIG. 1, one embodiment of the polycarbosilane synthesis step will be described. FIG. 1 is a view illustrating a liquid phase-gas phase thermolysis apparatus 10 for use in polycarbosilane synthesis.

The liquid phase-gas phase thermolysis apparatus 10 includes a liquid phase reaction vessel 1, a liquid phase heater 2, a liquid phase thermocouple 3, a gas phase reaction tube 4, a gas phase heater 5, a gas phase thermocouple 6, a first cooling tube 7, a flowmeter 8, and a valve 9.

First, a cyclic polysilane is placed in the liquid phase reaction vessel 1 and heated at the first temperature by using the liquid phase heater 2 under an inert gas to generate a gas phase. As the inert gas, for example, nitrogen, argon, or the like can be used. The first temperature is measured using the liquid phase thermocouple 3. An amount of the inert gas is adjusted using the flowmeter 8.

Next, the generated gas phase moves to the gas phase reaction tube 4 and is heated at the second temperature using the gas phase heater 5 to produce polycarbosilane. The second temperature is measured using the gas phase thermocouple 6.

Next, the generated polycarbosilane is cooled by the first cooling pipe 7 and the liquid phase is returned to the liquid phase reaction vessel 1 and heated at the first temperature using the liquid phase heater 2 to increase the molecular weight of the polycarbosilane.

A series of these reactions are repeatedly performed, and after a predetermined synthesis time elapses, the liquid phase and the gas phase are cooled and the synthesized polycarbosilane is collected from the liquid phase reaction vessel 1. In this way, polycarbosilane before molecular weight adjustment is obtained.

Molecular weight adjustment step

The method for producing polycarbosilane according to the one aspect of the present invention preferably further includes a molecular weight adjustment step of removing polycarbosilane having a low molecular weight from the polycarbosilane synthesized in the polycarbosilane synthesis step. The average molecular weight of the polycarbosilane can be increased by the molecular weight adjustment step. Examples of the polycarbosilane having a low molecular weight include polycarbosilane having a molecular weight of 5500 or less. Further, it is possible to increase the bonding index of polycarbosilane by the molecular weight adjustment step, and finally, polycarbosilane having a bonding index of 2.58 or more can be obtained. Thus, by the method for producing polycarbosilane according to the one aspect of the present invention, a highly branched polycarbosilane can be produced. In a case where the polycarbosilane is used to produce SiC fibers, the fibers are less likely to fuse to each other during pyrolyzing, and generation of decomposition gas is suppressed. In addition, with the molecular weight adjustment step, the SiC fibers become SiC fibers having a high tensile strength.

A method of the molecular weight adjustment step is not particularly limited as long as it is possible to remove polycarbosilane having a low molecular weight and the effect of the present application is not impaired. For example, the polycarbosilane having a low molecular weight can be removed by adding a solvent to the polycarbosilane synthesized in the polycarbosilane synthesis step and removing a dissolved component.

The solvent to be added to the polycarbosilane is not particularly limited as long as it is a solvent capable of extracting polycarbosilane having a low molecular weight, and can be appropriately selected depending on the range of molecular weights desired to be removed. The solvent may be a single solvent or a mixed solvent. Examples of the single solvent include methyl acetate, ethyl acetate, propyl acetate, isopropyl acetate, butyl acetate, isobutyl acetate, sec-butyl acetate, acetone, methyl ethyl ketone, methylene chloride, hexane, and tetrahydrofuran. The amount of the solvent to be added can be appropriately set by those skilled in the art in consideration of the range of molecular weights desired to be removed. For example, the amount can be 1 to 8 times by weight, and preferably 5 times by weight with respect to the polycarbosilane.

In addition, the extraction temperature of the dissolved component can be appropriately set by those skilled in the art. For example, the extraction temperature may be 20°C or higher and the boiling point of the solvent or lower.

The molecular weight adjustment step may be performed only once or may be performed a plurality of times. From the viewpoint of yield and operability, the number of times of the molecular weight adjustment step is preferably 5 times or less and more preferably 4 times or less. In a case where the molecular weight adjustment step is performed a plurality of times, a process only needs to be repeatedly performed, in which the polycarbosilane synthesized in the polycarbosilane synthesis step is added to the solvent, the dissolved component is removed, then the solvent is added to the insoluble component, and the dissolved component is removed. In addition, in the case where the molecular weight adjustment step is performed a plurality of times, the solvent to be added to the polycarbosilane may be the same solvent or different solvents each time. The solvent to be added to the polycarbosilane in the molecular weight adjustment step is preferably ethyl acetate or hexane from the viewpoint of ease of treatment of a waste liquid or ease of handling of the solvent, and more preferably ethyl acetate from the viewpoint of ease of obtaining polycarbosilane having a desired molecular weight range by changing the amount of the solvent, the extraction temperature, or the number of times of the operation. As described above, the process may be performed with ethyl acetate only once or a plurality of times. It is also possible to perform the process with ethyl acetate once or a plurality of times and then with hexane.

Other steps

The production method according to the one aspect of the present invention may include a step other than the polycarbosilane synthesis step and the molecular weight adjustment step. Other steps are not particularly limited as long as the effects of the present invention are not impaired.

The production method according to the one aspect of the present invention may include, after the molecular weight adjustment step, a removal step of adding a solvent to the polycarbosilane whose molecular weight has been adjusted and removing an insoluble component. It is possible to remove impurities contained in the polycarbosilane after molecular weight adjustment by the removal step. The insoluble component may be removed by filtration, for example. The solvent is not particularly limited as long as it is capable of extracting the polycarbosilane. Examples of the solvent include: aromatic hydrocarbons such as benzene, toluene, ethylbenzene, xylene, and mesitylene; aliphatic hydrocarbons such as hexane, heptane, octane, and nonane; and halogenated hydrocarbons such as chloroform and dichloromethane. An amount of the solvent to be added only needs to be an amount in which the polycarbosilane is dissolved, and can be appropriately set by those skilled in the art. The extraction temperature can be appropriately set by those skilled in the art and may be, for example, room temperature (22°C).

3. Method for Producing Silicon Carbide Fiber

A method for producing silicon carbide fibers according to one aspect of the present invention includes a spinning step of forming the polycarbosilane according to the one aspect of the present invention into a fibrous shape, and a pyrolyzing step of pyrolyzing the polycarbosilane fibers generated in the spinning step. With such a configuration, it is possible to produce SiC fibers having a high tensile strength.

Spinning step

The spinning step is a step of spinning the polycarbosilane according to the one aspect of the present invention into a fibrous shape. The polycarbosilane according to the one aspect of the present invention is the same as described in "1. Polycarbosilane."

Examples of the spinning method include a melt spinning method, a dry spinning method, and a wet spinning method. The dry spinning method is preferable from the viewpoint that spinning can be performed not necessarily under a high temperature condition and a rapid temperature drop does not occur after spinning, whereby variation in fiber diameter can be reduced. In addition, the polycarbosilane according to the one aspect of the present invention has a given number average molecular weight, and thus the dry spinning method can be suitably performed. In a case where the dry spinning method is performed, spinning can be performed by, for example, the following method. That is, the polycarbosilane according to the one aspect of the present invention is dissolved in a solvent to adjust a dry spinning solution. The dry spinning solution is then charged into a spinning apparatus to generate polycarbosilane fibers.

A solvent for dissolving the polycarbosilane may be any solvent capable of dissolving the polycarbosilane, and examples thereof include: aromatic hydrocarbons such as benzene, toluene, ethylbenzene, xylene, and mesitylene; aliphatic hydrocarbons such as hexane, heptane, octane, and nonane; and halogenated hydrocarbons such as chloroform and dichloromethane. Toluene or xylene is preferably used because of being excellent in solubility of polycarbosilane and volatility.

A concentration of the dry spinning solution can be appropriately adjusted by those skilled in the art, and may be, for example, 50 to 70%.

A viscosity of the dry spinning solution can be appropriately adjusted by those skilled in the art depending on a nozzle diameter of the spinning apparatus. For example, in a case of a nozzle diameter of 65 $\mu$m, the viscosity may be 10 to 30 Pa·s at 25°C. The viscosity can be determined by a known method for measuring the viscosity of a solution, and can be measured, for example, by using an E-type viscometer.

As the spinning apparatus used for spinning, an apparatus usually used in the present technical field only needs to be used. For example, a green fiber can be obtained by supplying the dry spinning solution to the spinning apparatus and performing spinning under conditions of a spinning nozzle diameter of 65 $\mu$m, discharge pressures of 2 to 3.5 MPa, and a spinning speed of 10 to 30 mg/min. The green fiber generated under such conditions may be, for example, polycarbosilane fibers having a green fiber diameter of 17.0 to 19.0.

Pyrolyzing step

The pyrolyzing step is a step of pyrolyzing the polycarbosilane fibers generated by the spinning step. It is possible to generate silicon carbide fibers by pyrolyzing the polycarbosilane fibers to convert them into ceramics.

The pyrolyzing conditions can be appropriately set by those skilled in the art. For example, the pyrolyzing may be performed under conditions described in Table 1 below. Further, the pyrolyzing may be performed under a condition in which the highest temperature in Table 1 is changed to 1400°C.

The tensile strength can be measured by a known method. For example, a tensile test on a monofilament is performed to measure a breaking stress, and the breaking stress is divided by a cross-sectional area of the SiC fiber, whereby the tensile strength can be obtained.

A tensile modulus of elasticity is a value calculated by dividing the obtained tensile strength by an elongation percentage with respect to a gauge length at the time of the tensile test.

The silicon carbide fibers produced by the method for producing silicon carbide fibers according to the one aspect of the present invention have a tensile strength of preferably 2.18 GPa or more, and more preferably 2.71 GPa or more.

Summary

Polycarbosilane according to a first aspect of the present invention has a bonding index, which is an indicator of a degree of branching, represented by the following Formula (1) of 2.63 or more, and an oxygen content of 1.15 wt.% or less:
[Math. 22]

$$\text{Bonding index} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

where in Formula (1),

$X_{CH3}$, $X_{CH2}$, $X_{CH}$, and $Xc$ are values obtained by dividing weight percentages of primary, secondary, tertiary, and quaternary carbon atoms, respectively, by 12, and

$Y_{SiH3}$, $Y_{SiH2}$, $Y_{SiH}$, and $Y_{Si}$ are values obtained by dividing weight percentages of primary, secondary, tertiary, and quaternary silicon atoms, respectively, by 28.086.

The polycarbosilane according to a second aspect of the present invention is that, in the first aspect, the number average molecular weight is preferably less than 6000.

A method for producing polycarbosilane according to a third aspect of the present invention is a method for producing the polycarbosilane according to the first or second aspect, the method including a polycarbosilane synthesis step, which includes repeatedly performing: a process of heating a raw material containing a cyclic silane compound at a first temperature to generate a gas phase, a process of heating the gas phase at a second temperature higher than the first temperature to generate polycarbosilane, and a process of cooling and returning the polycarbosilane to the raw material and heating the returned polycarbosilane at the first temperature to increase the molecular weight of the polycarbosilane.

A method for producing polycarbosilane according to a fourth aspect of the present invention is the method for producing polycarbosilane according to the third aspect, which preferably further includes a molecular weight adjustment step of removing polycarbosilane having a low molecular weight from the polycarbosilane synthesized in the polycarbosilane synthesis step.

A method for producing polycarbosilane according to a fifth aspect of the present invention is the method for producing polycarbosilane according to the third or fourth aspect, in which the second temperature is preferably 650°C or lower.

A method for producing polycarbosilane according to a sixth aspect of the present invention is the method for producing polycarbosilane according to any one of the third to fifth aspects, in which the cyclic silane compound is preferably dodecamethylcyclohexasilane.

A method for producing silicon carbide fibers according to a seventh aspect of the present invention includes: a spinning step of spinning the polycarbosilane according to the first or second aspect into a fibrous shape; and a pyrolyzing step of pyrolyzing the polycarbosilane fibers generated in the spinning step.

A method for producing silicon carbide fibers according to an eighth aspect of the present invention is the method for producing silicon carbide fibers according to the seventh aspect, in which in the spinning step, the polycarbosilane is preferably spun into a fibrous shape by dry spinning.

## EXAMPLES

Embodiments of the present invention will be further described in detail using the examples below. Needless to say, the present invention is not limited to the following examples, and details of the present invention can be in various manners. Note that reagents and apparatuses whose manufacturers are not described in the examples were those commonly used in the art.

1. Synthesis of Polycarbosilane (PCS)

Synthesis Example 1

Dodecamethylcyclohexasilane (DMCHS) was placed in a liquid phase reaction vessel of a liquid phase-gas phase thermolysis apparatus as illustrated in FIG. 1. Next, a liquid phase in the liquid phase reaction vessel was heated to 400 to 500°C, and a gas phase in a gas phase reaction tube was heated to 650°C and reacted for 4 hours and 25 minutes to synthesize PCS. As the DMCHS, one produced in accordance with a known production method was used.

Synthesis Example 2

PCS was synthesized in the same manner as in Synthesis Example 1 except that the gas phase in the gas phase reaction tube was heated to 600°C and the reaction time was 6 hours.

Synthesis Example 3

PCS was synthesized in the same manner as in Synthesis Example 2 except that the reaction time was 6 hours and 30 minutes.

Synthesis Example 4

Polydimethylsilane (PDMS) was placed into the liquid phase reaction vessel instead of DMCHS. Next, the liquid phase in the liquid phase reaction vessel was heated to 400 to 500°C, and the gas phase in the gas phase reaction tube was heated to 600°C and reacted for 5 hours to synthesize PCS.

Synthesis Example 5

PCS was synthesized in the same manner as in Synthesis Example 4 except that the reaction time was 8 hours.

Synthesis Example 6

Synthesis of PCS was attempted in the same manner as in Synthesis Example 4 except that the gas phase in the gas phase reaction tube was heated to 670°C, but the synthesis was interrupted because some of the pipes in the apparatus were clogged with a gas phase reaction product during the reaction.

Synthesis Example 7

Synthesis of PCS was attempted in the same manner as in Synthesis Example 1 except that the gas phase in the gas phase reaction tube was heated to 670°C, but the synthesis was interrupted because some of the pipes in the apparatus were clogged with a gas phase reaction product during the reaction.

Synthesis Example 8

PCS was synthesized in the same manner as in Synthesis Example 1 except that the gas phase in the gas phase reaction tube was heated at 660°C and the reaction time was one and a half hours.

2. Molecular Weight Adjustment and Removal of Impurities

[Example 1]

The PCS synthesized in Synthesis Example 1 was washed four times with ethyl acetate in an amount of 5 times by weight at 50°C to be separated into a dissolved component and an insoluble component, thereby adjusting the molecular weight. Thereafter, the insoluble component was washed with hexane at room temperature to adjust the molecular weight, and separated into a dissolved component and an insoluble component. Next, the obtained insoluble component was dissolved in toluene at room temperature. The insoluble component was removed by filtration, and then the solvent was removed to obtain PCS as Example 1.

Examples 2 to 5

The PCS synthesized in Synthesis Example 2 was washed 1 to 4 times with ethyl acetate in an amount of 5 times by weight at 50°C to be separated into a dissolved component and an insoluble component, thereby adjusting the molecular weight. The insoluble component was then dissolved in toluene at room temperature. The insoluble component was removed by filtration, and then the solvent was removed to obtain PCS as Examples 2 to 5.

Example 6 and Comparative Examples 1 to 3

PCS was obtained in the same manner as in Example 5 except that ethyl acetate was used in an amount of 5 times by weight with respect to the respective PCS synthesized in Synthesis Examples 3 to 5 and 8. Synthesis Example 3 was used in Example 6, Synthesis Examples 4 and 5 were used in Comparative Examples 1 and 2, respectively, and Synthesis Example 8 was used in Comparative Example 3.

[Example 7]

The PCS synthesized in Synthesis Example 3 was dissolved in toluene at room temperature without molecular weight adjustment. The insoluble component was removed by filtration, and then the solvent was removed to obtain PCS as Example 7.

3. Spinning

The PCS from which the insoluble component was removed was dissolved in xylene in such a manner that the viscosity of the spinning solution at 25°C was 14 to 25 Pa·s, thereby preparing a dry spinning solution. Thereafter, the prepared solution was extruded from a spinneret (nozzle) having a nozzle diameter of 65 μm and wound to obtain polycarbosilane fibers (green fibers) having a fiber diameter of 17 to 19 μm.

4. Pyrolyzing

The green fibers of PCS of Examples 1 to 7 and Comparative Examples 1 and 2 were pyrolyzed at a highest temperature of 1000°C under the conditions shown in Table 1 to obtain silicon carbide fibers.

[Table 1]

| Temperature range | Temperature raising rate [°C/h] | Pyrolyzing atmosphere | Holding time after reaching highest temperature [h] |
|---|---|---|---|
| r.t. to 500°C | 150 | N2 | |
| 500 to 800°C | 100 | 60% H2/Ar | |
| 800 to 1000°C | 150 | Ar | 1 |

For the green fibers of PCS of Examples 4 and 6 to 7 and Comparative Example 1, silicon carbide fibers were also obtained by pyrolyzing under the condition where the highest temperature was changed to 1400°C.

5. Evaluation

Elemental analysis

The oxygen contents of the PCS synthesized in Synthesis Examples 1 to 5 and 8 and the PCS after the insoluble component removal step in Examples 1 to 7 and Comparative Examples 1 to 3 were measured using EMGA-930 available from Horiba, Ltd., the elemental analysis values of carbon atoms of the PCS synthesized in Synthesis Examples 1 to 5 and 8 and the PCS after the insoluble component removal step in Examples 1 to 7 and Comparative Examples 1 to 3 were measured using a carbon-sulfur analyzer CS844 available from LECO Corporation, and the elemental analysis values of hydrogen atoms were measured using Series II CHNS/O ANLYZER 2400 available from Perkin Elmer. The elemental analysis value of silicon atoms was a remaining amount obtained by subtracting the elemental analysis values of carbon and hydrogen and the oxygen content from the total ratio (100%).

Measurement of molecular weight

The molecular weights of the PCS synthesized in Synthesis Examples 1 to 5 and 8 and the PCS after the insoluble component removal step in Examples 1 to 7 and Comparative Examples 1 to 3 were determined by GPC measurement under the following conditions.

Apparatus name: HPLC, available from Shimadzu Corporation
Columns: one KF-604, one KF-602, and one KF-601 are connected in this order from the pump side for use (all available from Showa Denko K.K.)
Measurement solvent: Toluene
Flow rate: analytical unit and reference: 0.40 mL/min
Oven: 40°C
Detector: differential refractometer (RID-20A available from Shimadzu Corporation)
Sample solution: 0.5 wt.%

$^1$H-NMR measurement

The PCS synthesized in Synthesis Examples 1 to 5 and 8 and the PCS of Examples 1 to 7 and Comparative Examples 1 to 3 were dissolved in deuterated chloroform, and subjected to $^1$H-NMR analysis under the following conditions. Integration values were calculated using a signal of 5.5 to 3.5 ppm as a signal derived from hydrogen on tertiary silicon (-SiH<), a signal of 1.0 to 0 ppm as a signal derived from hydrogen on primary carbon ($CH_3$-), a signal of 0 to -0.4 ppm as a signal derived from hydrogen on secondary carbon (-CH$_2$-), and a signal of -0.4 to -1.0 ppm as a signal derived from hydrogen on tertiary carbon (-CH<). Note that no signal derived from hydrogen on primary and secondary silicon could be confirmed.

Measuring instrument: JNM-ECZ600R/S1 (available from JEOL Ltd.)
Number of scans: 8

$^{29}$Si-NMR analysis

The PCS synthesized in Synthesis Examples 1 to 5 and 8 and the PCS of Examples 1 to 7 and Comparative Examples 1 to 3 were dissolved in deuterated chloroform, and subjected to $^{29}$Si-NMR analysis under the following conditions. Integration values were calculated using a signal of 10 to -8 ppm as a signal derived from quaternary silicon (>Si<), and a signal of -8 to -24 ppm as a signal derived from tertiary silicon (-SiH<). Note that no signal derived from primary and secondary silicon could be confirmed. Measuring instrument: JNM-ECZ600R/S1 (available from JEOL Ltd.) Measurement method details: no rotation; 45° pulse irradiation; acquisition time 0.659 seconds; measurement with a pulse sequence at a delay interval of 16 seconds
Number of scans: 512

Measurement of spinning solution viscosity

The viscosity of the dry spinning solution was measured using an E-type viscosimeter (ARES-G2 available from TA Instruments) under conditions of a temperature of 25°C and a shear rate of 200 sec$^{-1}$.

Calculation of bonding index

Calculation was performed according to Formulas (1) to (20) described in the above-described embodiment. However, neither primary nor secondary silicon was confirmed.

Operability

For each test segment, the operability of the liquid phase-gas phase thermolysis apparatus in polycarbosilane synthesis was evaluated. When the evaluation is acceptable or good, it can be said that synthesis of polycarbosilane is not hindered. Note that a metallic pipe having a nominal diameter of 15 A was used as a pipe for the apparatus.
Good: The viscosity of polycarbosilane flowing in the pipe is low, and the possibility of causing clogging of the pipe during operation is low.
Acceptable: The viscosity of the polycarbosilane flowing in the pipe is relatively high, and it is necessary to appropriately heat the pipe through which the polycarbosilane passes to prevent clogging of the pipe during operation. In addition, a solid adheres to the outlet of the gas phase reaction tube, and a part of the pipe is constricted.
Unacceptable: The viscosity of the polycarbosilane flowing through the pipe is very high, and a large amount of a solid adheres to the outlet of the gas phase reaction tube. This causes pipe clogging and makes it difficult to complete the operation.

Yield

The yield in the polycarbosilane synthesis step was calculated as a weight yield in percentage obtained by dividing the weight of PCS obtained from the liquid phase reaction vessel by the weight of the raw materials charged into the reaction vessel.
The PCS yield after molecular weight adjustment was calculated as a weight yield in percentage obtained by dividing the dry weight of PCS obtained after the insoluble component removal step subsequent to molecular weight adjustment by the weight of PCS before molecular weight adjustment.

Fiber diameter

The diameters of the SiC fibers were measured at a magnification of 2000 times using an optical microscope VHX-5000 available from KEYENCE CORPORATION.

Tensile strength

STA-1150 available from ORIENTEC CO., LTD. was used to perform a tensile test of a monofilament at a gauge length of 25 mm and a cross-head speed of 5 mm/min, thereby measuring a breaking stress. The tensile strength was obtained by dividing the measured breaking stress by the cross-sectional area of the SiC fiber. The tensile strength in the present examples was an average value obtained by performing the tensile test 10 times.

Tensile modulus of elasticity

The tensile modulus of elasticity was calculated by dividing the obtained tensile strength by an elongation percentage with respect to a gauge length at the time of the tensile test.

6. Results

The evaluation results are shown in Tables 2 to 5. Specifically, the evaluation results of the PCS after synthesis are shown in Table 2, the evaluation results of the PCS after molecular weight adjustment and the insoluble component removal step are shown in Table 3, the evaluation results of the PCS fibers after spinning are shown in Table 4, and the evaluation results of the SiC fibers after pyrolyzing are shown in Table 5. Note that in Tables 2 to 5, a bar was described for an item in which no data was measured, and "unmeasurable" was described for an item in which no data could be measured.

[Table 2]

| | Polycarbosilane synthesis step | | | | | | | | | |
|---|---|---|---|---|---|---|---|---|---|---|
| | Raw material | First temperature [°C] | Second temperature [°C] | Time | Yield [%] | Mn | Mw | Mw/Mn | Bondi ng index | Operability |
| Synthesis Example 1 | DMCHS | 400 to 500 | 650 | 4 hours 25 minutes | 49.8 | 1795 | 7292 | 4.06 | 2.65 | Acceptable |
| Synthesis Example 2 | DMCHS | | 600 | 6 hours | 60.0 | 1726 | 10630 | 6.16 | 252 | Good |
| Synthesis Example 3 | | | 600 | 6 hours 30 minutes | 60.7 | 1854 | 11474 | 6.19 | 2.62 | Good |
| Synthesis Example 4 | PDMS | | 600 | 5 hours | 60.9 | 1359 | 5513 | 4.06 | 2.55 | Good |
| Synthesis Example 5 | | | 600 | 8 hours | 57.2 | 1850 | 10167 | 5.50 | 2.60 | Good |
| Synthesis Example 6 | | | 670 | Midway interruption | - | - | - | - | - | Unacceptable |
| Synthesis Example 7 | DMCHS | | 670 | Midway interruption | - | - | - | - | - | Unacceptable |
| Synthesis Example 8 | DMCHS | | 660 | 1 hour 30 minutes | 32.1 | 1745 | 6357 | 3.64 | 2.55 | Acceptable |

[Table 3]

| | Synthesis Example | Solvent | Molecular weight adjustment step | | | | | | |
|---|---|---|---|---|---|---|---|---|---|
| | | | Number of times of molecular weight adjustment | PCS yield after molecular weight adjustment [%] | Mn | Mw | Mw/Mn | Bonding index | Oxygen content [wt%] |
| Example 1 | Synthesis Example 1 | Ethyl acetate + hexane | 4+1 | 29.0 | 5966 | 12731 | 2.13 | 2.70 | 0.58 |
| Example 2 | Synthesis Example 2 | Ethyl acetate | 1 | 80.8 | 2811 | 11467 | 4.08 | 2.58 | 1.11 |
| Example 3 | Synthesis Example 2 | Ethyl acetate | 2 | 72.9 | 3974 | 12858 | 3.24 | 2.59 | 0.83 |
| Example 4 | Synthesis Example 2 | Ethyl acetate | 3 | 67.8 | 4462 | 12882 | 2.89 | 2.62 | 0.77 |
| Example 5 | Synthesis Example 2 | Ethyl acetate | 4 | 64.2 | 5314 | 13487 | 2.54 | 2.61 | 0.90 |
| Example 6 | Synthesis Example 3 | Ethyl acetate | 4 | 69.8 | 4927 | 14100 | 2.86 | 2.63 | 0.77 |
| Example 7 | Synthesis Example 3 | Ethyl acetate | 0 | - | 1672 | 10581 | 6.33 | 2.62 | 0.40 |
| Comparative Example 1 | Synthesis Example 4 | Ethyl acetate | 4 | 40.1 | 5880 | 9242 | 1.57 | 2.54 | 0.74 |
| Comparative Example 2 | Synthesis Example 5 | Ethyl acetate | 4 | 62.1 | 5988 | 14225 | 2.38 | 2.56 | 0.36 |
| Comparative Example 3 | Synthesis Example 8 | Ethyl acetate | 4 | 68.6 | 3662 | 8409 | 2.30 | 2.70 | 1.23 |

[Table 4]

| | Spinning step | | | | |
|---|---|---|---|---|---|
| | Solution concentration [wt%] | Viscosity [Pa•S] | Discharge pressure [MPa] | Spinning speed [mg/min] | Green fiber diameter [μm] |
| Example 1 | 54.0 | 14.9 | 2.1 | 22.2 | 17.5 |
| Example 2 | 59.5 | 18.8 | 2.5 | 18.5 | 17.9 |
| Example 3 | 60.7 | 23.7 | 3.1 | 18.8 | 18.2 |
| Example 4 | 56.2 | 23.2 | 3.0 | 19.1 | 18.2 |
| Example 5 | 54.5 | 24.3 | 2.0 | 16.3 | 18.1 |
| Example 6 | 55.2 | 20.0 | 2.5 | 21.0 | 17.8 |
| Example 7 | 61.9 | 17.2 | 2.4 | 21.9 | 18.5 |
| Comparative Example 1 | 56.0 | 17.9 | 2.6 | 18.6 | 18.3 |
| Comparative Example 2 | 54.4 | 17.6 | 2.7 | 19.2 | 17.7 |

[Table 5]

| | Pyrolyzing step | | | | | |
| --- | --- | --- | --- | --- | --- | --- |
| | Pyrolyzing temperature: 1000°C | | | Pyrolyzing temperature: 1400°C | | |
| | Pyrolyzed fiber diameter [μm] | Tensile strength [GPa] | Tensile modulus of elasticity [GPa] | Pyrolyzed fiber diameter [μm] | Tensile strength [GPa] | Tensile modulus of elasticity [GPa] |
| Example 1 | 10.56 | 2.71 | 262 | - | - | - |
| Example 2 | 8.46 | 2.34 | 234 | - | - | - |
| Example 3 | 10.90 | 2.18 | 249 | - | - | - |
| Example 4 | 10.51 | 2.27 | 243 | 10.61 | 2.21 | 344 |
| Example 5 | 9.87 | 2.26 | 263 | - | - | - |
| Example 6 | 10.79 | 2.88 | 237 | 10.47 | 2.80 | 346 |
| Example 7 | 10.53 | 2.47 | 253 | 10.40 | 1.57 | 318 |
| Comparative Example 1 | 10.87 | 1.91 | 252 | 10.85 | 2.08 | 346 |
| Comparative Example 2 | 10.06 | 1.93 | 247 | - | - | - |

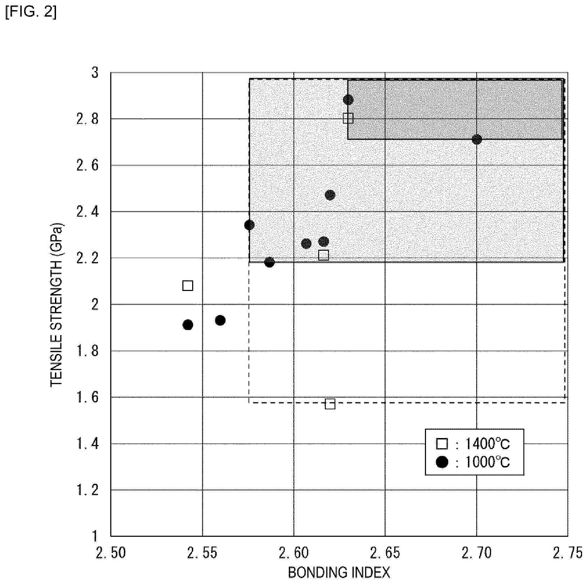

FIG. 2 shows the relationship between the bonding index of the polycarbosilane and the tensile strength of the SiC fiber. In FIG. 2, the horizontal axis represents the bonding index of the polycarbosilane of Examples 1 to 7 and Comparative Examples 1 and 2, and the vertical axis represents the tensile strength of the SiC fibers produced in Examples 1 to 7 and Comparative Examples 1 and 2. A range surrounded by a broken line indicates a range in which the bonding index is 2.58 or more and the tensile strength is 1.50 GPa or more. A range surrounded by light gray indicates a range in which the bonding index is 2.58 or more and the tensile strength is 2.18 GPa or more. A range surrounded by dark gray indicates a range in which the bonding index is 2.63 or more and the tensile strength is 2.71 GPa or more.

From the above results, the polycarbosilane produced from a cyclic silane compound had a higher bonding index than that of the polycarbosilane produced from a polysilane which is not cyclic. Accordingly, it was shown that the polycarbosilane according to the one aspect of the present invention is a highly branched polycarbosilane. FIG. 2 has also shown that with the highly branched polycarbosilane, the SiC fibers have a higher tensile strength. Thus, it has been shown that the SiC fibers produced by using the polycarbosilane according to the one aspect of the present invention have a high tensile strength.

## INDUSTRIAL APPLICABILITY

The polycarbosilane according to one aspect of the present invention can be suitably used as a raw material for silicon carbide fibers.

## REFERENCE SIGNS LIST

1 Liquid phase reaction vessel
2 Liquid phase heater
3 Liquid phase thermocouple
4 Gas phase reaction tube
5 Gas phase heater
6 Gas phase thermocouple
7 First cooling tube
8 Flowmeter
9 Valve
10 Liquid phase-gas phase thermolysis apparatus

**Claims**

1. Polycarbosilane having a bonding index, which is an indicator of a degree of branching, represented by the following Formula (1) of 2.63 or more:

   [Math. 1]

$$\text{Bonding index} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

   and an oxygen content of 1.15 wt.% or less,

   where in Formula (1),
   $X_{CH3}$, $X_{CH2}$, $X_{CH}$, and $X_C$ are values obtained by dividing weight percentages of primary, secondary, tertiary, and quaternary carbon atoms, respectively, by 12, and
   $Y_{SiH3}$, $Y_{SiH2}$, $Y_{SiH}$, and $Y_{Si}$ are values obtained by dividing weight percentages of primary, secondary, tertiary, and quaternary silicon atoms, respectively, by 28.086.

2. The polycarbosilane according to claim 1, having a number average molecular weight of less than 6000.

3. A method for producing polycarbosilane, which is a method for producing the polycarbosilane described in claim 1 or 2,
   the method comprising a polycarbosilane synthesis step, the polycarbosilane synthesis step comprising performing repeatedly: a process of heating a raw material containing a cyclic silane compound at a first temperature to generate a gas phase; a process of heating the gas phase at a second temperature higher than the first temperature to generate polycarbosilane; and a process of cooling and returning the polycarbosilane to the raw material and heating the returned polycarbosilane at the first temperature to increase a molecular weight of the polycarbosilane.

4. The method for producing polycarbosilane according to claim 3, further comprising a molecular weight adjustment step of removing, from the polycarbosilane synthesized in the polycarbosilane synthesis step, polycarbosilane having a low molecular weight.

5. The method for producing polycarbosilane according to claim 3, wherein the second temperature is 650°C or lower.

6. The method for producing polycarbosilane according to claim 3, wherein the cyclic silane compound is dodecamethylcyclohexasilane.

7. A method for producing silicon carbide fibers, the method comprising:

   a spinning step of spinning the polycarbosilane described in claim 1 or 2 into a fibrous shape; and
   a pyrolyzing step of pyrolyzing the polycarbosilane fibers generated in the spinning step.

8. The method for producing silicon carbide fibers according to claim 7, wherein in the spinning step, the polycarbosilane is spun into a fibrous shape by dry spinning.

[FIG. 1]

[FIG. 2]

## INTERNATIONAL SEARCH REPORT

| International application No. |
|---|
| **PCT/JP2023/003367** |

### A. CLASSIFICATION OF SUBJECT MATTER

*C08G 77/60*(2006.01)i; *C01B 32/977*(2017.01)i; *D01F 9/10*(2006.01)i
FI: C08G77/60; C01B32/977; D01F9/10 A

According to International Patent Classification (IPC) or to both national classification and IPC

### B. FIELDS SEARCHED

Minimum documentation searched (classification system followed by classification symbols)

C08G77/60; C01B32/977; D01F9/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-137935 A (IHI AEROSPACE CO., LTD.) 22 August 2019 (2019-08-22)<br>entire text | 1-8 |
| A | JP 2021-11440 A (KUREHA CORP.) 04 February 2021 (2021-02-04)<br>entire text | 1-8 |
| A | WO 2020/045614 A1 (KUREHA CORP.) 05 March 2020 (2020-03-05)<br>entire text | 1-8 |
| A | WO 2019/176704 A1 (KUREHA CORP.) 19 September 2019 (2019-09-19)<br>entire text | 1-8 |
| A | WO 2010/119825 A1 (NIPPON SODA CO., LTD.) 21 October 2010 (2010-10-21)<br>entire text | 1-8 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 February 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/003367**

| Patent document cited in search report | | | Publication date (day/month/year) | Patent family member(s) | | | Publication date (day/month/year) |
|---|---|---|---|---|---|---|---|
| JP | 2019-137935 | A | 22 August 2019 | (Family: none) | | | |
| JP | 2021-11440 | A | 04 February 2021 | (Family: none) | | | |
| WO | 2020/045614 | A1 | 05 March 2020 | US entire text EP CN | 2021/0277036 3845543 112469726 | A1 A1 A | |
| WO | 2019/176704 | A1 | 19 September 2019 | US entire text EP CN | 2020/0407379 3766890 111712505 | A1 A1 A | |
| WO | 2010/119825 | A1 | 21 October 2010 | US entire text EP CN | 2012/0016149 2420506 102388057 | A1 A1 A | |

Form PCT/ISA/210 (patent family annex) (January 2015)

**EP 4 524 181 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019137935 A
- JP S51126300 A